(19) Europäisches Patentamt
European Patent Office
Office européen des brevets

(11) **EP 4 438 574 A1**

(12) **EUROPEAN PATENT APPLICATION**
published in accordance with Art. 153(4) EPC

(43) Date of publication:
**02.10.2024 Bulletin 2024/40**

(21) Application number: **22898322.7**

(22) Date of filing: **27.10.2022**

(51) International Patent Classification (IPC):
***C03C 17/25*** (2006.01)

(52) Cooperative Patent Classification (CPC):
**C03C 17/25**

(86) International application number:
**PCT/JP2022/040272**

(87) International publication number:
**WO 2023/095538 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.11.2021 JP 2021192595**

(71) Applicant: **NIPPON SHEET GLASS COMPANY,
LIMITED
Tokyo 108-6321 (JP)**

(72) Inventors:
• **IWAI, Nobuki
Tokyo 108-6321 (JP)**
• **KAMITANI, Kazutaka
Tokyo 108-6321 (JP)**

(74) Representative: **Hasegawa, Kan
Patentanwaltskanzlei Hasegawa
Untere Hauptstraße 56
85354 Freising (DE)**

(54) **COVER MEMBER**

(57) A cover member according to the present invention comprises: a glass plate having a first surface and a second surface; and a functional film formed on the first surface. The functional film is formed of a single film, and has an antiglare function and an antimicrobial function.

FIG. 3

EP 4 438 574 A1

**Description**

TECHNICAL FIELD

The present invention relates to a cover member provided on a member to be protected such as a display, and a method for manufacturing the cover member.

BACKGROUND ART

Patent Document 1 discloses glass in which an antimicrobial substance is provided on a surface of a glass plate by ion exchange of an antimicrobial ion component.

PRIOR ART DOCUMENT

PATENT DOCUMENT

Patent Document 1: Japanese Patent Laid-open Publication No. 11-228186

SUMMARY OF THE INVENTION

PROBLEMS TO BE SOLVED BY THE INVENTION

In recent years, there is a demand for a film having an antimicrobial performance and, in addition, another function such as an antiglare performance. However, for production of such a film having a plurality of functions, a plurality of films are to be layered for the functions, respectively, resulting in a problem of complicated manufacturing. The present invention has been made to solve this problem, and an object of the present invention is to provide a cover member including a functional film that is a single film and exhibits a plurality of functions, and to provide a method for manufacturing the cover member.

MEANS FOR SOLVING THE PROBLEM

Item 1. A cover member including:

a glass plate having a first surface and a second surface; and
a functional film formed on the first surface,
the functional film being a single film, the functional film having an antiglare function and an antimicrobial function.

Item 2. The cover member according to Item 1, wherein
the functional film includes:

a matrix forming a three-dimensional network bond, the matrix containing an inorganic oxide;
inorganic oxide fine particles; and
an antimicrobial metal ion.

Item 3. The cover member according to Item 2, wherein
the functional film has:

a first region in which the inorganic oxide particles are stacked in a thickness direction of the functional film; and
a second region surrounding the first region or surrounded by the first region, the second region having a valley shape.

Item 4. The cover member according to Item 3, wherein the first region has a plateau shape.
Item 5. The cover member according to Item 3 or 4, wherein the second region has a part in which the inorganic oxide particles are not stacked or the inorganic oxide particles are absent.
Item 6. The cover member according to any one of Items 3 to 5, wherein

the first region has a width of 3 $\mu$m or more, and
the second region has a width of 1 $\mu$m or more.

Item 7. The cover member according to any one of Items 3 to 5, wherein

the first region has a width of 5 $\mu$m or more, and
the second region has a width of 2 $\mu$m or more.

Item 8. The cover member according to any one of Items 3 to 7, wherein

the matrix is exposed in the second region, and
the matrix exposed contains the antimicrobial metal ion.

Item 9. The cover member according to any one of Items 3 to 8, wherein

in the first region, the matrix is placed on the glass plate, and the inorganic oxide particles are stacked on the carrier, and
the matrix in the first region contains the antimicrobial metal ion.

Item 10. The cover member according to any one of Items 3 to 9, wherein at least one of the second region is formed by a closed curve.
Item 11. The cover member according to Item 10, including a plurality of regions as the second region, the plurality of regions formed by a plurality of closed curves having different sizes.
Item 12. The cover member according to any one of Items 3 to 11, wherein the first region is raised near a boundary between the first region and the second region.
Item 13. A method for manufacturing a cover member, the method including the steps of:

forming a coating liquid in which inorganic oxide fine particles and an antimicrobial metal ion are added to a silicon alkoxide;
applying the coating liquid to a glass plate; and
heating the glass plate to which the coating liquid is applied.

ADVANTAGES OF THE INVENTION

According to the present invention, a functional film can be provided that is a single film and exhibits a plurality of functions.

BRIEF DESCRIPTION OF THE DRAWINGS

Fig. 1 is a sectional view illustrating an embodiment of a cover member according to the present invention.
Fig. 2 is an enlarged sectional view of Fig. 1.
Fig. 3 is an enlarged sectional view of Fig. 1.
Fig. 4 is a sectional view schematically illustrating a section of a protrusion of a functional film.
Fig. 5 is an enlarged sectional view of Fig. 1.
Fig. 6 is a SEM photograph showing a surface property in Example 1.
Fig. 7 is a SEM photograph showing a surface property in Example 4.
Fig. 8 is a SEM photograph showing a surface property in Comparative Example.

EMBODIMENTS OF THE INVENTION

Hereinafter, an embodiment of the cover member according to the present invention will be described with reference to the drawings. The cover member according to the present embodiment is configured to protect a member to be protected such as a display, a keyboard, or an electronic blackboard and allow such a member to be visually recognized from the outside. The term "display" refers to a general desktop display and displays used in various devices such as a mobile PC, a tablet PC, and an in-vehicle device such as a car navigation system. In addition, the cover member can also be used as a document glass of a copier or a scanner. In this case, the member to be protected is a component of the electronic device such as a copier or a scanner covered by the cover member.

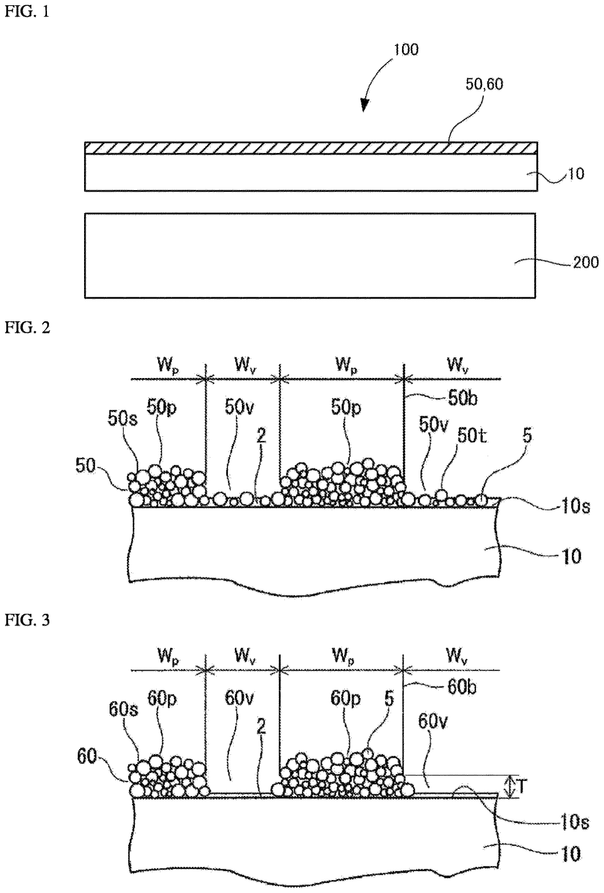

Fig. 1 is a sectional view of the cover member. As illustrated in Fig. 1, a cover member 100 according to the present embodiment includes a glass plate 10 having a first surface and a second surface, and functional films 50 and 60 layered on the first surface of the glass plate 10. The cover member 10 is placed so as to cover a member to be protected 200 described above. At this time, the second surface of the glass plate 10 is placed so as to face the member to be protected 200, and the functional films 50 and 60 are placed so as to face the outside. Details will be described below.

<1. Glass Plate>

The glass plate 10 can be formed of, for example, glass such as general-purpose soda-lime glass, borosilicate glass, aluminosilicate glass, alkali-free glass, or the like. The glass plate 10 can be shaped with a float method. Using this manufacturing method, the glass plate 10 having a smooth surface can be obtained. However, the glass plate 10 may have unevenness on the main surface, and may be, for example, figured glass. Figured glass can be shaped with a manufacturing method called a roll out method. The figured glass manufactured with this manufacturing method usually has periodic unevenness in one direction along the main surface of the glass plate.

In the float method, molten glass is continuously supplied onto a molten metal such as molten tin, and the supplied molten glass is made to flow on the molten metal and thus formed into a band plate shape. The glass thus shaped is referred to as a glass ribbon.

The glass ribbon is cooled in the downward flow, and, in a cooled and solidified state, pulled up with a roller from the molten metal. Then, the glass ribbon is conveyed with a roller to an annealing furnace, cooled slowly, and then cut. Thus, a float glass plate is obtained.

The thickness of the glass plate 10 is not particularly limited, but is preferably thin for weight reduction. For example, the thickness is preferably 0.3 to 5 mm, and more preferably 0.6 to 2.5 mm. This is because if the glass plate 10 is too thin, the strength deteriorates, and if the glass plate 10 is too thick, distortion may be caused in the member to be protected 200 that is visually recognized through the glass member 10.

The glass plate 10 may be usually a flat plate, but may be a curved plate. In particular in a case where the member to be protected 200 as a protection target has a non-flat surface shape such as a curved surface, the glass plate 10 preferably has a main surface having a non-flat shape conforming to the non-flat surface shape. In this case, the glass plate 10 may be curved so that the entire glass plate 10 has a constant curvature, or may be locally curved. The main surface of the glass plate 10 may be formed by, for example, connecting a plurality of flat surfaces to each other in the curved surface. The glass plate 10 can have a radius of curvature of, for example, 5000 mm or less. The lower limit of the radius of curvature can be, for example, 10 mm or more. Particularly in a locally curved portion, the lower limit may be smaller, and can be, for example, 1 mm or more.

A glass plate having the following composition can also be used. Hereinafter, the expression "%" indicating the content of a component of the glass plate 10 always means mol% unless otherwise specified. In the present description, the phrase "substantially composed of" means that the total content rate of the listed components is 99.5 mass% or more, preferably 99.9 mass% or more, and more preferably 99.95 mass% or more. The phrase "containing substantially no" means that the content rate of the component is 0.1 mass% or less, and preferably 0.05 mass% or less.

On the basis of the float plate glass composition used widely as a glass composition suitable for manufacturing a glass plate with the float method (hereinafter, sometimes referred to as "SL in a narrow sense" or simply "SL"), the present inventors have studied a composition capable of improving the chemical strengthening property of the SL in a narrow sense while a property such as $T_2$ or $T_4$ is made as close as possible to that of the SL in a narrow sense within the range of a composition regarded by those skilled in the art as the composition of soda-lime silicate glass suitable for the float method (hereinafter, sometimes referred to as "SL in a broad sense"), specifically, within the following range by mass%.

| | |
|---|---|
| $SiO_2$ | 65 to 80% |
| $Al_2O_3$ | 0 to 16% |
| $MgO$ | 0 to 20% |
| $CaO$ | 0 to 20% |
| $Na_2O$ | 10 to 20% |
| $K_2O$ | 0 to 5% |

Hereinafter, each component constituting the glass composition of the glass plate 10 will be described.

(SiO$_2$)

SiO$_2$ is a main component included in the glass plate 10, and if the content rate of SiO$_2$ is too low, the chemical durability such as water resistance and heat resistance of glass deteriorates. Meanwhile, if the content rate of SiO$_2$ is too high, the glass plate 10 has a high viscosity at a high temperature, and becomes difficult to melt and shape. Therefore, the content rate of SiO$_2$ is appropriately in the range of 66 to 72 mol%, and preferably 67 to 70 mol%.

(Al$_2$O$_3$)

Al$_2$O$_3$ is a component for an improvement in chemical durability such as water resistance of the glass plate 10 and further facilitation of movement of alkali metal ions in the glass to increase the surface compressive stress after chemical strengthening and increase the depth of the stress layer. Meanwhile, if the content rate of Al$_2$O$_3$ is too high, the viscosity of the glass melt is increased, T$_2$ and T$_4$ are increased, the clarity of the glass melt deteriorates, and thus manufacturing of a high-quality glass plate becomes difficult.
Therefore, the content rate of Al$_2$O$_3$ is appropriately in the range of 1 to 12 mol%. The content rate of Al$_2$O$_3$ is preferably 10 mol% or less, and preferably 2 mol% or more.

(MgO)

MgO is an essential component for an improvement in meltability of glass. From the viewpoint of obtaining this effect sufficiently, MgO is preferably added to the glass plate 10. If the content rate of MgO is less than 8 mol%, the surface compressive stress after chemical strengthening is decreased, and the depth of the stress layer tends to be decreased. Meanwhile, if the content rate is increased to be more than an appropriate amount, the strengthening performance obtained by chemical strengthening deteriorates, and in particular, the depth of the surface compressive stress layer is rapidly decreased. This adverse effect is the smallest in the case of MgO among the cases of alkaline earth metal oxides, but in the glass plate 1, the content rate of MgO is 15 mol% or less. If the content rate of MgO is high, T$_2$ and T$_4$ are increased, the clarity of the glass melt deteriorates, and thus manufacturing of a high-quality glass plate becomes difficult.
Therefore, in the glass plate 10, the content rate of MgO is in the range of 1 to 15 mol%, and preferably 8 mol% or more and 12 mol% or less.

(CaO)

CaO has an effect of reducing viscosity at a high temperature, but if the content rate is too high exceeding an appropriate range, the glass plate 10 is easily devitrified, and movement of sodium ions in the glass plate 10 is inhibited. In a case where CaO is not contained, the surface compressive stress after chemical strengthening tends to be decreased. Meanwhile, if CaO is contained in an amount more than 8 mol%, the surface compressive stress after chemical strengthening is remarkably decreased, the depth of the compressive stress layer is remarkably decreased, and the glass plate 10 is easily devitrified.
Therefore, the content rate of CaO is appropriately in the range of 1 to 8 mol%. The content rate of CaO is preferably 7 mol% or less, and preferably 3 mol% or more.

(SrO, BaO)

SrO and BaO significantly reduce the viscosity of the glass plate 10, and, at a low content, have a more remarkable effect of reducing the liquid phase temperature T$_L$ than CaO. However, even if only a small amount of SrO or BaO is added, movement of sodium ions in the glass plate 10 is remarkably hindered, the surface compressive stress is significantly decreased, and the depth of the compressive stress layer is considerably decreased.
Therefore, the glass plate 10 preferably contains substantially no SrO and substantially no BaO.

(Na$_2$O)

Na$_2$O is a component in which sodium ions are to be replaced by potassium ions for an increase in the surface compressive stress and an increase in the depth of the surface compressive stress layer. However, if the content rate is increased to be more than an appropriate amount, generation of the surface compressive stress by ion exchange in a chemical strengthening treatment is exceeded by stress relaxation during the chemical strengthening treatment, and as a result, the surface compressive stress tends to be decreased.
Na$_2$O is also a component for an improvement in meltability and a decrease in T$_4$ and T$_2$. Meanwhile, if the

content rate of $Na_2O$ is too high, the water resistance of glass remarkably deteriorates. In the glass plate 10, if the content rate of $Na_2O$ is 10 mol% or more, an effect of decreasing $T_4$ and $T_2$ is sufficiently obtained, and if the content rate of $Na_2O$ is more than 16 mol%, the surface compressive stress is remarkably decreased by stress relaxation.

Therefore, the content rate of $Na_2O$ in the glass plate 10 of the present embodiment is appropriately in the range of 10 to 16 mol%. The content rate of $Na_2O$ is preferably 12 mol% or more, and more preferably 15 mol% or less.

($K_2O$)

$K_2O$ is a component, like $Na_2O$, for an improvement in meltability of glass. In the range of a low $K_2O$ content rate, the ion exchange rate in chemical strengthening is increased, and the depth of the surface compressive stress layer is increased while the liquid phase temperature $T_L$ of the glass plate 10 is decreased. Therefore, $K_2O$ is preferably contained at a low content rate.

Meanwhile, $K_2O$ has a smaller effect of decreasing $T_4$ and $T_2$ than $Na_2O$, but a large amount of $K_2O$ contained inhibits clarification of the glass melt. Furthermore, as the content rate of $K_2O$ increases, the surface compressive stress after chemical strengthening deteriorates. Therefore, the content rate of $K_2O$ is appropriately in the range of 0 to 1 mol%.

($Li_2O$)

Even if only a small amount of $Li_2O$ is contained, the depth of the compressive stress layer is significantly decreased. In the case of chemically strengthening a glass member containing $Li_2O$ with a molten salt of potassium nitrate alone, the rate of deterioration of the molten salt is significantly higher than that in the case of a glass member containing no $Li_2O$. Specifically, in the case of chemically strengthening a glass member containing $Li_2O$ repeatedly with the same molten salt, the surface compressive stress formed on the glass surface is decreased with a smaller number of times of the chemical strengthening. Therefore, the glass plate 10 of the present embodiment may contain 1 mol% or less of $Li_2O$, but preferably contains substantially no $Li_2O$.

($B_2O_3$)

$B_2O_3$ is a component that reduces the viscosity of the glass plate 10 and improves the meltability. However, if the content rate of $B_2O_3$ is too high, phase separation is likely to occur in the glass plate 10, and the water resistance of the glass plate 10 deteriorates. Furthermore, a compound formed by $B_2O_3$ and an alkali metal oxide may volatilize to damage a refractory in a glass melting chamber. In addition, $B_2O_3$ contained decreases the depth of the compressive stress layer in chemical strengthening. Therefore, the content rate of $B_2O_3$ is appropriately 0.5 mol% or less. In the present invention, the glass plate 10 more preferably contains substantially no $B_2O_3$.

($Fe_2O_3$)

Fe is usually present in glass in the state of $Fe^{2+}$ or $Fe^{3+}$, and acts as a colorant. $Fe^{3+}$ is a component that enhances the ultraviolet absorption performance of glass, and $Fe^{2+}$ is a component that enhances the heat ray absorption performance. In the case of using the glass plate 10 as a cover glass of a display, coloring is to be inconspicuous, and therefore the content rate of Fe is preferably low. However, Fe is inevitably mixed from an industrial raw material in many cases. Therefore, the content rate of iron oxide in terms of $Fe_2O_3$ is preferably 0.15 mass% or less, more preferably 0.1 mass% or less, and still more preferably 0.02 mass% or less with respect to 100 mass% of the entire glass plate 10.

($TiO_2$)

$TiO_2$ is a component that reduces the viscosity of the glass plate 10 and simultaneously increases the surface compressive stress by chemical strengthening, but may color the glass plate 10 yellow. Therefore, the content rate of $TiO_2$ is appropriately 0 to 0.2 mass%. $TiO_2$ may be inevitably mixed from an industrial raw material usually used, and about 0.05 mass% of $TiO_2$ may be contained in the glass plate 10. $TiO_2$ at such a content rate does not color glass, and therefore may be contained in the glass plate 10 of the present embodiment.

($ZrO_2$)

It is known that, particularly in manufacturing a glass plate by the float method, $ZrO_2$ may be mixed into the glass plate 10 from a refractory brick constituting a glass melting furnace and the content rate of $ZrO_2$ is about 0.01 mass%. Meanwhile, $ZrO_2$ is a component that improves the water resistance of glass and increases the surface compressive stress by chemical strengthening. However, a high content rate of $ZrO_2$ may cause an increase in the working

temperature $T_4$ and a rapid increase in the liquid phase temperature $T_L$, and in manufacturing a glass plate by the float method, a crystal containing Zr precipitated is likely to remain as a foreign matter in the manufactured glass. Therefore, the content rate of $ZrO_2$ is appropriately 0 to 0.1 mass%.

(SO$_3$)

In the float method, a sulfate such as sodium sulfate ($Na_2SO_4$) is widely used as a clarifying agent. The sulfate is decomposed in molten glass to generate a gas component, and thus defoaming of the glass melt is promoted, but a part of the gas component is dissolved and remains as $SO_3$ in the glass plate 10. In the glass plate 10 of the present invention, the amount of $SO_3$ is preferably 0 to 0.3 mass%.

(CeO$_2$)

$CeO_2$ is used as a clarifying agent. $CeO_2$ generates an $O_2$ gas in molten glass, and therefore contributes to defoaming. Meanwhile, if the amount of $CeO_2$ is too large, the glass is colored yellow. Therefore, the content of $CeO_2$ is preferably 0 to 0.5 mass%, more preferably 0 to 0.3 mass%, and still more preferably 0 to 0.1 mass%.

(SnO$_2$)

It is known that in a glass plate formed with the float method, tin from a tin bath is diffused on a surface in contact with the tin bath during molding and the tin is present as $SnO_2$. Furthermore, $SnO_2$ mixed in the glass raw material contributes to defoaming. In the glass plate 10 of the present invention, the amount of $SnO_2$ is preferably 0 to 0.3 mass%.

(Another Component)

The glass plate 10 according to the present embodiment is preferably substantially composed of the components listed above. However, the glass plate 10 according to the present embodiment may contain components other than the components listed above preferably in a range such that the content rate of each component is less than 0.1 mass%.
Examples of the component allowed to be contained include, in addition to $SO_3$ and $SnO_2$ described above, $As_2O_5$, $Sb_2O_5$, Cl, and F that are added for the purpose of defoaming molten glass. However, $As_2O_5$, $Sb_2O_5$, Cl, and F are preferably not added because they adversely affect the environment significantly. Other examples of the component allowed to be contained include ZnO, $P_2O_5$, $GeO_2$, $Ga_2O_3$, $Y_2O_3$, and $La_2O_3$. A component other than the above-described components that is derived from an industrially used raw material is allowed to be contained in the range of not more than 0.1 mass%. Since these components are appropriately added as necessary or inevitably mixed, the glass plate 10 of the present embodiment may contain substantially none of these components.

(Density (Specific Gravity): d)

With the above-described composition, in the present embodiment, the density of the glass plate 10 can be reduced to 2.53 g·cm$^{-3}$ or less, further reduced to 2.51 g·cm$^{-3}$ or less, and in some cases, reduced to 2.50 g·cm$^{-3}$ or less.
In the float method or the like, if the glass varieties have large differences in density, molten glass having a higher density is retained at the bottom of the melting furnace when the glass variety to be manufactured is changed, and the variety change may be hindered. Soda-lime glass mass-produced with the float method currently has a density of about 2.50 g·cm$^{-3}$. Therefore, in consideration of mass production with the float method, the density of the glass plate 10 is preferably close to the above-described value, specifically, 2.45 to 2.55 g·cm$^{-3}$, particularly 2.47 to 2.53 g·cm$^{-3}$ and more preferably 2.47 to 2.50 g·cm$^{-3}$.

(Elastic Modulus: E)

When chemical strengthening involving ion exchange is performed, the glass substrate may be warped. In order to suppress this warpage, the glass plate 10 preferably has a high elastic modulus. According to the present invention, the elastic modulus (Young's modulus: E) of the glass plate 10 can be increased to 70 GPa or more, and further increased to 72 GPa or more.
Hereinafter, the chemical strengthening of the glass plate 10 will be described.

(Conditions for Chemical Strengthening and Compressive Stress Layer)

The chemical strengthening of the glass plate 10 according to the present invention can be performed by bringing the glass plate 10 containing sodium into contact with a molten salt containing monovalent cations having a larger ionic radius than sodium ions, preferably potassium ions, and performing an ion exchange treatment of replacing sodium ions in the glass plate 10 with the above-described monovalent cations. As a result, a compressive stress layer in which a compressive stress is applied to the surface is formed.

Typical examples of the molten salt include potassium nitrate. A mixed molten salt of potassium nitrate and sodium nitrate can also be used, but a molten salt of potassium nitrate alone is preferable because concentration control of a mixed molten salt is difficult.

The surface compressive stress and the depth of the compressive stress layer in the strengthened glass member can be controlled not only by the glass composition of the article but also by the temperature of the molten salt in the ion exchange treatment and the treatment time.

By bringing the glass plate 10 into contact with potassium nitrate molten salt, a strengthened glass member can be obtained that has a very high surface compressive stress and a very deep compressive stress layer. Specifically, a strengthened glass member can be obtained that has a surface compressive stress of 700 MPa or more and a depth of the compressive stress layer of 20 $\mu$m or more, and a strengthened glass member can also be obtained that has a depth of the compressive stress layer of 20 $\mu$m or more and a surface compressive stress of 750 MPa or more.

In the case of using the glass plate 10 having a thickness of 3 mm or more, not chemical strengthening but thermal strengthening by air can be used as a general strengthening method. The strengthening treatment is generally performed on a cover member, but is not essential in some uses or for some properties required. The strengthening treatment is often performed prior to formation of a functional film (described below), but may be performed after the formation of a functional film as long as functional expression of the functional film is not hindered.

<2. Functional Film>

Next, the functional film will be described with reference to Figs. 2 and 3. Fig. 2 is a partial sectional view of a glass plate on which a functional film is layered, and Fig. 3 is another exemplary partial sectional view of a glass plate on which a functional film is layered. As illustrated in Figs. 2 and 3, cover members 400 and 500 include a glass plate 10, and include functional films 50 and 60 provided on the glass plate 10, respectively. In Figs. 2 and 3, the functional films 50 and 60 are each directly formed on a first surface 10s of the glass plate 10, but another film may be interposed between the glass plate 10 and each of the functional films 50 and 60. The functional films 50 and 60 include inorganic oxide fine particles 5 (hereinafter, sometimes simply referred to as "particles", a matrix 2 forming a three-dimensional network bond, and an antimicrobial metal ion. The functional films 50 and 60 may include a void. The void may be present in the matrix 2 or in contact with the particles 5 and the matrix 2.

In the functional films 50 and 60, first regions 50p and 60p and second regions 50v and 60v are present. In the first regions 50p and 60p, the particles 5 are stacked in the thickness direction of the functional films 50 and 60. When the functional films 50 and 60 are observed from the surface side along the thickness direction, the second regions 50v and 60v surround the first regions 50p and 60p. However, the second regions 50v and 60v may be surrounded by the first regions 50p and 60p. In the first regions 50p and 60p and the second regions 50v and 60v, for example, the first region or the second region is between a plurality of other regions present apart from each other.

This structure may be referred to as a sea-island structure. The second regions 50v and 60v are a valley-shaped region having a surface recessed from the surrounding first region. Therefore, the island portion of the sea-island structure protrudes from the sea portion in a case where the island portion is the first regions 50p and 60p, and the island portion is recessed from the sea portion in a case where the island portion is the second regions 50v and 60v. In the second regions 50v and 60v, the number of stacked particles 5 is smaller than that in the first regions 50p and 60p. The second regions 50v and 60v may include a part 50t in which the particles 5 are stacked (see Fig. 2). Alternatively, the second regions 50v and 60v may include a part in which the particles 5 are not stacked or the particles 5 are absent (see Fig. 3). At least a part of the second regions 50v and 60v may include a part in which the particles 5 are not stacked or the particles 5 are absent. At least a part, or 50% or more in terms of number, or in some cases, all of the first regions 50p and 60p may be a region having a plateau shape. The matrix 2 is present in both the first regions 50p and 60p and the second regions 50v and 60v, and in the second regions 50v and 60v, at least a part of the matrix 2 is exposed to the outside. Meanwhile, in the first regions 50p and 60p, the matrix 2 is placed on the glass plate 10, and the particles 5 are layered on the matrix 2.

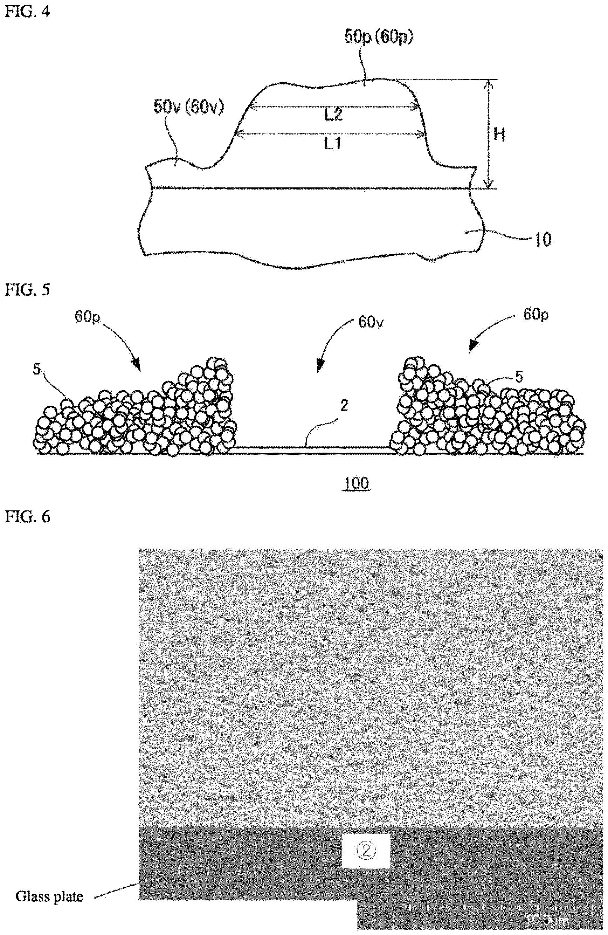

The phrase "having a plateau shape" means that when the functional films 50 and 60 are observed with a SEM or the like, the upper portions of the protrusions of the films appear to have a plateau shape, and strictly, means that L2/L1 ≥ 0.75, particularly L2/L1 ≥ 0.8 is satisfied in the sections of the films. Here, as illustrated in Fig. 4, L1 is the length of a part corresponding to 50% of the height H of each protrusion, and L2 is the length of a part corresponding to 70% of the height H, preferably a part corresponding to 75% of the height H. As illustrated in Fig. 4, L2 may be the length of two or more separate parts for one L1. In this case, L2 is determined to be the total length of the two or more parts.

A boundary 50b between the first region 50p and the second region 50v and a boundary 60b between the first region 60p and the second region 60v can be determined by the average thickness T of the functional films 50 and 60, respectively (see Fig. 3). The average thickness T can be measured using a laser microscope as described below. The width Wp of the first regions 50p and 60p and the width Wv of the second regions 50v and 60v are determined by the interval between the boundaries 50b and the interval between the boundaries 60b.

The width Wp may be 3 $\mu$m or more, further 5 $\mu$m or more, and preferably 7 $\mu$m or more. The width Wv may be 1 $\mu$m or more, or 2 $\mu$m or more, and preferably 3 $\mu$m or more. For example, the width Wp is preferably larger than the width Wv. If the width Wp is large, visible light is easily directly transmitted through the functional films 50 and 60, so that the haze ratio tends to be low. Meanwhile, if the width Wv is small, the boundaries between a first region 50p and a second region 50v are close to each other, and boundaries between a first region 60p and a second region 60v are close to each other. As a result, near the boundaries with the second regions 50v and 60v, the walls of the first regions 50p and 60p scatter visible light and thus make visual recognition difficult, resulting in a low gloss value. For example, if the second regions 50v and 60v are absent, the functional films have only the first regions 50p and 60p, and thus have a visible light transmission performance that is not different from those of the first regions. Therefore, if the second regions 50v and 60v are absent, the effect of scattering by the walls of the first regions 50p and 60p may be relatively weakened. Therefore, the width Wv is preferably 1 $\mu$m or more as described above. If the width Wp and the width Wv simultaneously satisfy the above-described ranges, the functional films 50 and 60 are particularly suitable for achieving both a low haze ratio and a low gloss.

Each of the first regions 50p and 60p and the second regions 50v and 60v may be a region spreading over, for example, 0.25 $\mu$m$^2$ or more, further 0.5 $\mu$m$^2$ or more, particularly 1 $\mu$m$^2$ or more, and in some cases, 5 $\mu$m$^2$ or more, further 10 $\mu$m$^2$ or more.

In the functional films 50 and 60, the first regions 50p and 60p and the second regions 50v and 60v are present. The rate of each of the second regions 50v and 60v in the area of the region in which the functional film 50 is formed may be, for example, 5 to 90%, further 10 to 70%, and particularly 20 to 50%. The functional film 50 may include only the first region 50p and the second region 50v, and the functional film 60 may include only the first region 60p and the second region 60v.

As illustrated in Fig. 5, at least a part of the first region 60p is raised near the boundary with the second region 60v. This raise also moderately scatters the visible light incident on the functional film 60, so that the gloss tends to be low. The same applies to the functional film 50. This effect is increased particularly in the case of the second regions 50v and 60v having a small width, because the raised parts are close to each other.

The shapes of the second regions 50v and 60v are not particularly limited, and examples thereof include various shapes such as shapes formed by a closed curve (for example, circular shapes including ellipses), polygonal shapes, and irregular shapes. A plurality of the second regions 50v and 60v may have different sizes. That is, a plurality of second regions 50v and 60v having different sizes may be dispersed in the functional films 50 and 60.

<2-1. Particles>

The shapes of the particles 5 are not particularly limited, but are preferably spherical. The particles 5 may be substantially composed of spherical particles. However, some of the particles 5 may have a shape other than a spherical shape, for example, a flat plate shape. The particles 5 may be composed of only spherical particles. Here, the spherical particles refer to particles that have a ratio of the longest diameter to the shortest diameter passing through the centroid of 1 or more and 1.8 or less, particularly 1 or more and 1.5 or less, and have a surface composed of a curved surface. The spherical particles may have an average particle diameter of 5 nm to 200 nm, further 10 nm to 100 nm, in particular 20 nm to 60 nm. The average particle diameter of the spherical particles is determined by the average of the individual particle diameters, specifically, the average values of the shortest diameter and the longest diameter described above, and the measurement is desirably performed for 30 particles, preferably 50 particles based on the SEM image.

The material included in the particles 5 is not particularly limited, but an inorganic oxide such as a metal oxide, particularly silicon oxide is preferably contained. However, the metal oxide may contain, for example, an oxide of at least one metal element selected from the group consisting of Al, Ti, Zr, Ta, Nb, Nd, La, Ce, and Sn.

The particles 5 can be supplied from a dispersion of the particles 5 to the functional films 50 and 60 as described below. In this case, a dispersion is preferably used in which the particles 5 are individually and independently dispersed. The use of a dispersion in which the particles are not aggregated is more suitable for achieving a desired aggregation state of the particles in the functional films 50 and 60 than use of a dispersion in which the particles are linked in a chain. This is because the independent particles 5 are likely to move along with volatilization of a liquid such as a dispersion medium, and are likely to be in an aggregation state suitable for achieving a good property in the film.

<2-2. Matrix>

The matrix 2 preferably contains silicon oxide, which is an oxide of Si, and preferably contains silicon oxide as a main component. The matrix 2 containing silicon oxide as a main component is suitable for reducing the refractive index of the film and suppressing the reflectance of the film. The matrix 2 may contain a component other than silicon oxide, and may contain a component partially containing silicon oxide.

The component partially containing silicon oxide includes, for example, a part composed of a silicon atom and an oxygen atom, and is a component in which an atom other than a silicon atom and an oxygen atom, a functional group, or the like is bonded to the silicon atom or the oxygen atom in the part. Examples of the atom other than a silicon atom and an oxygen atom include a nitrogen atom, a carbon atom, a hydrogen atom, and metal elements described in the following paragraph. Examples of the functional group include organic groups described as R in the following paragraph. Strictly, such components are not silicon oxide in that they are not composed only of silicon atoms and oxygen atoms. However, in describing the property of the matrix 2, it is appropriate to treat the silicon oxide part composed of a silicon atom and an oxygen atom as "silicon oxide", and this treatment is also common in the art. In the present description, the silicon oxide part is also treated as silicon oxide. As is clear from the above description, the atomic ratio of silicon atoms to oxygen atoms in silicon oxide may be not stoichiometric (1 : 2).

The matrix 2 can contain a metal oxide other than silicon oxide, specifically a metal oxide component or a metal oxide part containing other than silicon. The metal oxide that can be contained in the matrix 2 is not particularly limited, and is, for example, an oxide of at least one metal element selected from the group consisting of Al, Ti, Zr, Ta, Nb, Nd, La, Ce, and Sn. The matrix 2 may contain an inorganic compound component other than an oxide, for example, a nitride, a carbide, a halide, or the like, and may contain an organic compound component.

A metal oxide such as silicon oxide can be formed from a hydrolysable organometallic compound. Examples of the hydrolyzable silicon compound include compounds represented by Formula (1).

$$R_nSiY_{4-n} \qquad (1)$$

R represents an organic group including at least one selected from alkyl groups, a vinyl group, an epoxy group, a styryl group, a methacryloyl group, and an acryloyl group. Y represents a hydrolyzable organic group that is at least one selected from alkoxy groups, an acetoxy group, alkenyloxy groups, and an amino group, or Y represents a halogen atom. The halogen atom is preferably Cl. n is an integer from 0 to 3, preferably 0 or 1.

R preferably represents an alkyl group, for example, an alkyl group having 1 to 3 carbon atoms, particularly a methyl group. Y preferably represents an alkoxy group, for example, an alkoxy group having 1 to 4 carbon atoms, particularly a methoxy group or an ethoxy group. Two or more of the compounds represented by the above-described formula may be used in combination. Examples of such a combination include a combination of a tetraalkoxysilane in which n is 0 and a monoalkyltrialkoxysilane in which n is 1.

The compound represented by Formula (1) forms a network structure in which silicon atoms are bonded to each other via an oxygen atom after hydrolysis and polycondensation. In this structure, the organic group represented by R is included in a state of being directly bonded to a silicon atom.

<2-3. Metal Ion>

The metal ion has an antimicrobial property, and can be formed of a monovalent or divalent copper ion, a silver ion, or the like. The content of metal ion in the functional films 50 and 60 is preferably 2 to 50% and more preferably 5 to 25% in terms of molar ratio with respect to the main component having the largest weight ratio among the compounds forming the network bond.

The metal ion is contained in the matrix 2. Therefore, in the second regions 50v and 60v in which the matrix 2 is exposed to the outside, an antimicrobial or antiviral performance is exerted against a bacterium or virus in contact with the second regions 50v and 60v. Meanwhile, in the first regions 50p and 60p, few metal ions are present on the surface, but when an attached bacterium or virus passes between the particles 5 and comes into contact with the matrix 2 near the glass plate 10, the metal ion contained in the matrix 2 exhibits an antimicrobial or antiviral performance.

<2-4. Physical Properties of Functional Film>

The ratio of the particles 1 to the matrix 2 in the functional films 50 and 60 is, for example, 0.05 to 10 or 0.05 to 7, and preferably 0.05 to 5 in terms of mass. The volume ratio of voids in the functional films 50 and 60 is not particularly limited, and may be 10% or more, and further 10 to 20%. However, voids may be absent.

The film thickness of the functional films 50 and 60 is not particularly limited, but the film thickness of the first regions 50p and 60p is suitably, for example, 50 nm to 1000 nm, more suitably 100 nm to 700 nm, and particularly suitably 100 nm to 500 nm from the viewpoint of, for example, ease of appropriately obtaining an antiglare property. Meanwhile, the film thickness of the second regions 50v and 60v is suitably, for example, 10 nm to 500 nm, and preferably 30 nm to 300 nm. In particular, the difference between the highest portion and the lowest portion of each of the functional films 50 and 60 measured from the first surface of the glass plate 10 may be 3 times or more, or 4 times or more the average particle diameter of the particles 5.

A sparkle is a bright spot that occurs according to the relationship between the minute unevenness for impartation of an antiglare function and the pixel size of a display panel. The sparkle is observed as irregular light fluctuations with variations in the relative position between the display device and the user's point of view. Sparkles have become apparent due to high definition of display devices. If the width Wp and the width Wv are set within the above-described ranges, the functional films 50 and 60 are particularly suitable for reducing the gloss and the haze in a well-balanced manner while suppressing the sparkle.

<2-5. Method of Forming Functional Film>

The method of forming the functional films 50 and 60 is not particularly limited, and, for example, the functional films 50 and 60 can be formed as follows. First, a material constituting the matrix described above, for example, a silicon alkoxide such as tetraethoxysilane is used to obtain an alcohol solution under an acidic condition, and a precursor liquid is produced. In addition, for example, a dispersion containing inorganic oxide fine particles such as colloidal silica is mixed with the precursor liquid. Furthermore, a liquid containing the above-described antimicrobial metal ion, for example, a dispersion containing an aqueous copper chloride solution or an aqueous copper nitrate solution is mixed with the precursor liquid. In addition, various additives can be mixed as necessary. For example, boron can be added as boric acid. For example, if boron remains in the functional films 50 and 60, aggregation of copper ions to form a crystal such as copper oxide can be suppressed because boron (BO$^-$) has an effect of attracting antimicrobial copper ions. Thus, a coating liquid for the functional films 50 and 60 is produced.

The solvent of the dispersion containing inorganic oxide fine particles is not particularly limited, and examples of the solvent include propylene glycol monomethyl ether (PGME), methyl ethyl ketone, toluene, and methyl isobutyl ketone. Among them, for example, a non-polar compound having a high boiling point (for example, 75°C or higher) such as methyl ethyl ketone, cyclohexane, toluene, or methyl isobutyl ketone is preferably used because by using such a compound as the solvent, the first regions 50p and 60p and the second regions 50v and 60v described above are formed.

Next, the coating liquid is applied to the first surface of the cleaned glass plate 10. The coating method is not particularly limited, and for example, a method such as a flow coating method, a spray coating method, a spin coating method can be used. Thereafter, the applied coating liquid is dried in an oven or the like, for example, for volatilization of the alcohol content in the solution at a predetermined temperature (for example, 80 to 120°C), and then sintered, for example, for hydrolysis and decomposition of the organic chain at a predetermined temperature (for example, 200 to 500 °C), and thus the functional films 50 and 60 can be obtained.

<3. Optical Properties of Cover Member>

As an optical property of the cover member 100 on which the antimicrobial film 2 is formed as described above, for example, the visible light transmittance is preferably 85% or more, and more preferably 90% or more. The haze ratio of the cover member 10 is, for example, 20% or less, further 15% or less, particularly 10% or less, and may be 1 to 8%, further 1 to 6% in some cases.

The gloss can be evaluated by the specular glossiness. The 60° specular glossiness of the glass plate 10 is, for example, 60 to 130%, further 70 to 120%, particularly 80 to 110%, or 85 to 100%. These specular glossiness values are measured for the surface 10s on which the functional films 50 and 60 are formed. As a cover member of a display of an in-vehicle device such as a car navigation system, a cover member showing a gloss of 120 to 140% is generally used. Meanwhile, the haze ratio of the glass plate 10 is, for example, 20% or less, further 15% or less, particularly 10% or less, and may be 1 to 8%, further 1 to 6%, particularly 1 to 5% in some cases.

The 60° specular glossiness G and the haze ratio H (%) preferably satisfy the relational expression (a), more preferably the relational expression (b), and still more preferably the relational expression (c). G and H may satisfy the relational expression (d).

$$H \leq -0.2G + 25 \qquad (a)$$

$$H \leq -0.2G + 24.5 \qquad (b)$$

$$H \leq -0.2G + 24 \qquad (c)$$

$$H \leq -0.15G + 18 \qquad (d)$$

The gloss can be measured in accordance with "Method 3 (60 degree specular gloss)" of "Specular glossiness-Methods of measurement" of JIS Z 8741-1997, and the haze can be measured in accordance with JIS K 7136: 2000.

<4. Characteristics>

The cover member 100 according to the present embodiment can achieve the following effects.

(1) In the glass member 100 according to the present embodiment, the functional films 50 and 60 include the matrix 2 supporting the antimicrobial metal ion. Therefore, the antimicrobial/antiviral function can be exhibited. In particular, elution of the metal ion can be suppressed because the metal ion is supported by the matrix 2 forming the three-dimensional network bond. For example, in the first regions 50p and 60p, the matrix 2 supporting the metal ion is covered with the particles 5, and therefore elution of the metal ion can be further suppressed.
(2) The functional films 50 and 60 have the first regions 50p and 60p in which the particles are stacked, and therefore visible light is easily directly transmitted, and the haze ratio can be reduced. Meanwhile, if the functional films 50 and 60 have the second regions 50v and 60v, visual recognition becomes difficult due to scattering of visual light near the boundaries with the first regions 50p and 60p, resulting in a low gloss value. This effect is increased particularly in the case of the second regions 50v and 60v having a small width, because the walls or the raised parts of the first regions 50p and 60p are close to each other. Therefore, according to the functional film of the present embodiment, the antiglare effect can be improved.
(3) As described above, in the present invention, both the antiglare function and the antimicrobial/antiviral function can be exhibited by the single functional films 50 and 60. Therefore, the functional films 50 and 60 can be easily manufactured.

<5. Modification>

Although one embodiment of the present invention is described above, the present invention is not limited to the above-described embodiment, and various modifications can be made without departing from the gist of the present invention. The following modifications can be appropriately combined.
<5-1> The functional films described in the above embodiment have the first regions 50p and 60p and the second regions 50v and 60v, but may be formed only of the first regions 50p and 60p. In this case, the dispersion of the particles is to be formed of propylene glycol monomethyl ether. As described above, even if the functional films are formed only of the first regions 50p and 60p, the antiglare function and the antimicrobial/antiviral function can be exhibited as described below.
<5-2> The cover member according to the present invention can be colorless and transparent, or can be colored and transparent or translucent by coloring at least one of the glass plate 1 or the functional films 50 and 60.

EXAMPLES

Hereinafter, Examples of the present invention will be described. However, the present invention is not limited to the following Examples.

(1) Preparation of Examples and Comparative Example

A functional film was layered on a 50 mm × 50 mm float glass plate to form a cover member according to each of Examples 1 to 4 and Comparative Example.
Coating liquids having the compositions in Table 1 were prepared. First, a precursor liquid for a matrix was prepared (the unit was g). Then, a mixed solution of the coating liquid and the precursor liquid was stirred at 60°C for 7 hours to obtain a precursor liquid by a hydrolysis reaction of TEOS. This precursor liquid was mixed with a dispersion of particles and copper nitrate while stirred. Then, the resulting mixed solution was stirred at room temperature to obtain a coating liquid. The difference between Examples 1 to 4 and Comparative Example is that the coating liquid of Comparative Example does not contain copper nitrate. Therefore, the antimicrobial/antiviral function is absent in Comparative Example.

[Table 1]

| | Total amount of coating liquid (g) | PGME (wt%) | PG (wt%) | 60% Nitric acid (wt%) | Cu(NO3)2·3H2O (mol% to SiO2) | Silica fine particle dispersion | Amount of silica fine particles added (wt% as SiO2) | B(OH)3 (mol%) | Tetraethyl orthosilicate TEOS (wt% as SiO2) | KBM-903 (wt% as SiO2) |
|---|---|---|---|---|---|---|---|---|---|---|
| Example 1 | 3.0 | 47.0 | 15.0 | 0.059 | 5.0 | PGM-AC-41 30Y | 1.2 | 5.0 | 1.8 | 0.005 |
| Example 2 | 3.0 | 47.0 | 15.0 | 0.059 | 5.0 | MEK-ST-L | 1.2 | 5.0 | 1.8 | 0.005 |
| Example 3 | 3.0 | 49.5 | 15.0 | 0.059 | 1.5 | MEK-ST-L | 1.2 | 5.0 | 1.8 | 0.005 |
| Example 4 | 3.0 | 47.0 | 15.0 | 0.059 | 5.0 | MIBK-ST-L | 12 | 5.0 | 1.8 | 0.005 |
| Comparative Example | 3.0 | 59.9 | 15.0 | 0.059 | (No addition) | PGM-AC-41 30Y | 1.2 | (No addition) | 1.8 | 0.005 |

• KBM-903 (manufactured by Shin-Etsu Chemical Co., Ltd.)
• MEK-ST-L (ORGANOSILICASOL manufactured by Nissan Chemical Corporation)
• PGM-AC-4130Y (ORGANOSILICASOL manufactured by Nissan Chemical Corporation)
• MIBK-ST-L (ORGANOSILICASOL manufactured by Nissan Chemical Corporation)

Next, this coating liquid was applied onto a glass plate by flow coating so as to have a thickness of about 200 to 300 nm, naturally dried for 10 minutes, and then heated in an oven set at 300°C for 30 minutes to form a functional film. Thus, the cover members according to Examples 1 to 4 and Comparative Example were completed.

(2) Evaluation

The cover members of Examples 1 to 4 and Comparative Example were subjected to the following tests. Table 2 shows the results.

(2-1) Optical Properties

The gloss value and the haze ratio were measured. As the gloss value, the 60° gloss value was measured from the side where the functional film was formed using a gloss checker ("Gloss Checker IG-320" manufactured by HORIBA, Ltd.). The haze ratio was measured with a haze meter NDH2000 manufactured by NIPPON DENSHOKU INDUSTRIES CO., LTD. At this time, the functional film was an incident surface, the haze ratio was measured at three points of the sample, and the average of the measured values was regarded as the haze ratio.

(2-2) Appearance

The second surface of the cover member was placed on an inspection table with illumination, and the appearance of the cover member when viewed from the functional film side was inspected in a state where the cover member was irradiated with illumination in accordance with the following criteria.

　　A: No film unevenness is visually observed.
　　B: Slight film unevenness is visually observed.

(2-2) Durability Test

Each of the cover members according to Examples 2 to 4 was immersed in 25 ml of water for 24 hours, and during the immersion, 1.5 ml of the water was extracted at predetermined time intervals, and the amount of copper ions eluted (elution amount per coating unit area) was calculated. The elution amount was calculated as follows. First, the test water colored with PACKTEST Copper (manufactured by KYORITSU CHEMICAL-CHECK Lab., Corp.) was measured with DIGITALPACKTEST Copper (the same as above), the concentration of copper ions contained in the liquid was determined, and then the mass% of the elution amount with respect to the copper before the test was calculated.

(2-3) Antiviral Property Test

The antimicrobial property was evaluated in accordance with JIS Z 2801: 2012 (film adhesion method) (corresponding to ISO 22916) as follows.

　　• Test bacteria: E. Coli (Escherichia coli NBRC 3972)
　　• Sample form: Cover member described above
　　• Duration of action: 24 Hours
　　• Calculation of antimicrobial activity value (R): $R = (Ut - U0) - (At - U0) = Ut - At$

　　　U0: Average of logarithmic values of viable cell counts immediately after inoculation to glass plate
　　　Ut: Average of logarithmic values of viable cell counts after 24 hours on glass plate
　　　At: Average of logarithmic values of viable cell counts after 24 hours on cover member

　　• Conditions of action: Temperature: 35°C, humidity: 90% or more (in accordance with JIS)
　　• Adhesive film: 40 mm $\times$ 40 mm PP film (JIS standard)
　　• Amount of test bacterial liquid collected: 0.2 ml
　　• Viable cell counts in test bacterial liquid: $1.1 \times 10^6$
　　• Measurement of viable cell counts: Measurement of viable cell counts on cover member immediately after inoculation of bacterial liquid to glass plate and after culturing for 24 hours

(2-4) Consideration

As a result of the above-described tests, it was found that the cover members according to Examples 1 to 4 had an appropriate gloss value and an appropriate haze ratio to obtain a sufficient antiglare function. Furthermore, all of the cover members according to Examples 1 to 4 had an antiviral activity of 2.5 or more. An antiviral activity of 2.0 or more is evaluated to be present, and therefore the cover members according to Examples 1 to 4 were confirmed to have a sufficient antiviral performance. The amount of copper eluted was not measured in Example 1 and Comparative Example, but in Examples 2 to 4, about 30 to 40% of copper remained in the functional film even in the durability test, and therefore the durability performance is considered to be sufficient. Regarding the appearance, slight film unevenness was observed in Example 1, but in Examples 2 to 4, a particular problem was absent.

[Table 2]

|  | Gloss value | Haze ratio | Appearance | Elution rate of copper | Antiviral activity |
|---|---|---|---|---|---|
| Example 1 | 102.2 | 5.0 | B | - | - |
| Example 2 | 88.8 | 6.2 | A | 64% | 2.5 or more |
| Example 3 | 75.3 | 7.6 | A | 72% | 2.5 or more |
| Example 4 | 89.4 | 5.8 | A | 60% | 2.5 or more |
| Comparative Example | 87.4 | 5.9 | A | - | - |

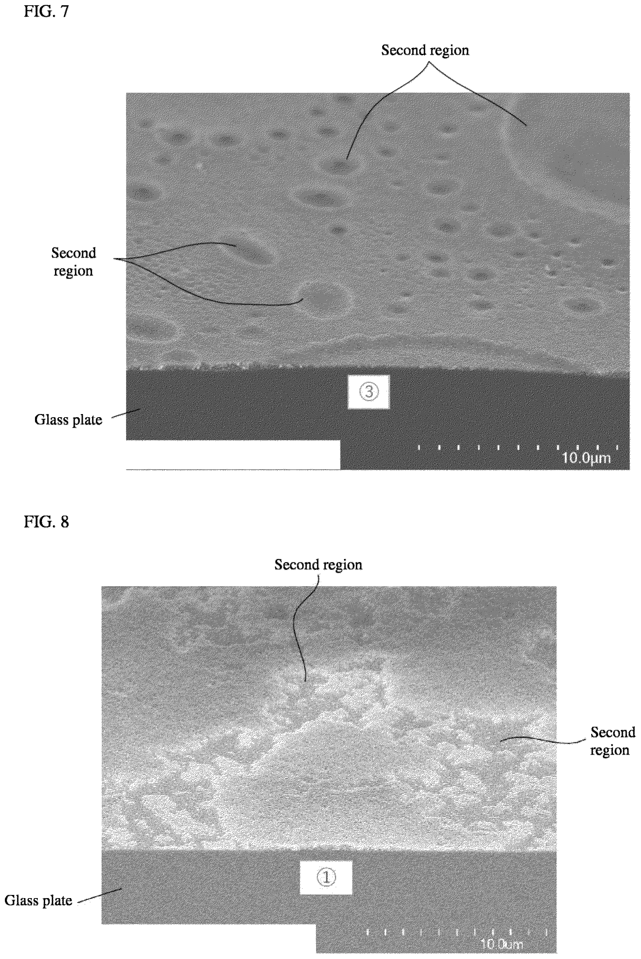

The functional films of Examples 1 and 4 and Comparative Example were photographed with a SEM, and the surface properties were observed. In Example 1 shown in Fig. 6, the functional film is formed only of the above-described first region. As described above, although the antiglare function and the antiviral function were sufficient, the unevenness on the surface was large, and slight film unevenness was observed in the appearance. Meanwhile, in the functional film of Example 4 shown in Fig. 7, the first region and the substantially circular second region were formed, the antiglare function and the antiviral function were sufficient, and there was no problem in appearance. The functional film of Comparative Example shown in Fig. 8 also had the first region and the second region, but the second region was deformed.

DESCRIPTION OF REFERENCE SIGNS

10: Glass plate
50, 60: Functional film
100: Cover member
200: Member to be protected

Claims

1. A cover member comprising:

a glass plate having a first surface and a second surface; and
a functional film formed on the first surface,
wherein the functional film is formed of a single film, and
the functional film has an antiglare function and an antimicrobial function.

2. The cover member according to claim 1, wherein
the functional film includes:

a matrix forming a three-dimensional network bond;
inorganic oxide fine particles; and
an antimicrobial metal ion.

3. The cover member according to claim 2, wherein

the functional film has:

a first region in which the inorganic oxide particles are stacked in a thickness direction of the functional film; and
a second region surrounding the first region or surrounded by the first region, the second region having a valley shape.

4. The cover member according to claim 3, wherein the first region has a plateau shape.

5. The cover member according to claim 3 or 4, wherein the second region has a part in which the inorganic oxide particles are not stacked or the inorganic oxide particles are absent.

6. The cover member according to any one of claims 3 to 5, wherein

the first region has a width of 3 $\mu$m or more, and
the second region has a width of 1 $\mu$m or more.

7. The cover member according to any one of claims 3 to 5, wherein

the first region has a width of 5 $\mu$m or more, and
the second region has a width of 2 $\mu$m or more.

8. The cover member according to any one of claims 3 to 7, wherein

the matrix is exposed in the second region, and
the matrix exposed contains the antimicrobial metal ion.

9. The cover member according to any one of claims 3 to 8, wherein

in the first region, the matrix is placed on the glass plate, and the inorganic oxide particles are stacked on the matrix, and
the matrix in the first region contains the antimicrobial metal ion.

10. The cover member according to any one of claims 3 to 9, wherein at least one of the second region is formed by a closed curve.

11. The cover member according to claim 10, wherein the cover member includes a plurality of regions as the second region, the plurality of regions formed by a plurality of closed curves having different sizes.

12. The cover member according to any one of claims 3 to 11, wherein the first region is raised near a boundary between the first region and the second region.

13. A method for manufacturing a cover member, the method comprising:

forming a coating liquid in which inorganic oxide fine particles and an antimicrobial metal ion are added to a silicon alkoxide;
applying the coating liquid to a glass plate; and
heating the glass plate to which the coating liquid is applied.

FIG. 1

FIG. 2

FIG. 3

FIG. 4

FIG. 5

100

FIG. 6

Glass plate

FIG. 7

Second region

Second region

Glass plate

③

10.0µm

FIG. 8

Second region

Second region

Glass plate

①

10.0µm

## INTERNATIONAL SEARCH REPORT

| International application No. |
|---|
| **PCT/JP2022/040272** |

### A. CLASSIFICATION OF SUBJECT MATTER

*C03C 17/25*(2006.01)i
FI:   C03C17/25 Z

According to International Patent Classification (IPC) or to both national classification and IPC

### B. FIELDS SEARCHED

Minimum documentation searched (classification system followed by classification symbols)

C03C15/00 -23/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2001-328846 A (NITTO SHOJI KK) 27 November 2001 (2001-11-27) claims 14, 16, paragraphs [0053]-[0054], example 1, fig. 1, 4-5 | 1 |
| A | | 2-13 |
| Y | WO 2021/221178 A1 (NIPPON SHEET GLASS CO LTD) 04 November 2021 (2021-11-04) claims 1-4, 21, paragraphs [0001]-[0004], [0028], [0031]-[0032], [0041], [0050]-[0051], [0053]-[0055], [0069], [0075]-[0076], [0085]-[0087], [0093], [0102]-[0103], 3rd antiglare, fig. 6-8 | 1-13 |
| Y | CN 102923966 A (WANG, Dexian) 13 February 2013 (2013-02-13) claims 1, 10, paragraphs [0001]-[0002], [0036], [0049]-[0053], example 1 | 1-13 |
| Y | JP 2017-530079 A (SCHOTT AG) 12 October 2017 (2017-10-12) claims 1-3, 19, paragraphs [0001]-[0002], [0034] | 1 |
| A | | 2-13 |
| Y | JP 2018-024240 A (ASAHI GLASS CO LTD) 15 February 2018 (2018-02-15) claims 1, 16, paragraphs [0001]-[0002], [0009], [0081] | 1 |
| A | | 2-13 |

✓ Further documents are listed in the continuation of Box C.        ✓ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 December 2022** | **10 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/040272**

**C.      DOCUMENTS CONSIDERED TO BE RELEVANT**

| Category* | Citation of document, with indication, where appropriate, of the relevant passages | Relevant to claim No. |
|---|---|---|
| A | JP 2008-512747 A (3M INNOVATIVE PROPERTIES COMPANY) 24 April 2008 (2008-04-24)<br>entire text, all drawings | 1-13 |
| A | JP 11-086757 A (NIPPON ELECTRIC GLASS CO LTD) 30 March 1999 (1999-03-30)<br>entire text, all drawings | 1-13 |
| A | JP 2016-018068 A (ASAHI GLASS CO LTD) 01 February 2016 (2016-02-01)<br>entire text, all drawings | 1-13 |
| A | WO 2021/132696 A1 (NIPPON SHEET GLASS CO LTD) 01 July 2021 (2021-07-01)<br>entire text, all drawings | 1-13 |

Form PCT/ISA/210 (second sheet) (January 2015)

## INTERNATIONAL SEARCH REPORT
### Information on patent family members

International application No.

**PCT/JP2022/040272**

| Patent document cited in search report | | | Publication date (day/month/year) | Patent family member(s) | | | Publication date (day/month/year) |
|---|---|---|---|---|---|---|---|
| JP | 2001-328846 | A | 27 November 2001 | (Family: none) | | | |
| WO | 2021/221178 | A1 | 04 November 2021 | (Family: none) | | | |
| CN | 102923966 | A | 13 February 2013 | (Family: none) | | | |
| JP | 2017-530079 | A | 12 October 2017 | US | 2017/0233287 | A1 | |
| | | | | claims 1-3, paragraphs [0003]-[0005], [0040] | | | |
| | | | | WO | 2016/037793 | A1 | |
| | | | | TW | 201630838 | A | |
| | | | | CN | 107074621 | A | |
| JP | 2018-024240 | A | 15 February 2018 | US | 2018/0033986 | A1 | |
| | | | | claims 1, 14, paragraphs [0001]-[0002], [0023], [0105] | | | |
| JP | 2008-512747 | A | 24 April 2008 | US | 2006/0046078 | A1 | |
| | | | | whole document | | | |
| | | | | WO | 2006/025992 | A1 | |
| | | | | EP | 1782106 | A1 | |
| | | | | KR | 10-2007-0046137 | A | |
| | | | | CN | 101010602 | A | |
| | | | | TW | 200613232 | A | |
| JP | 11-086757 | A | 30 March 1999 | (Family: none) | | | |
| JP | 2016-018068 | A | 01 February 2016 | CN | 105319616 | A | |
| | | | | TW | 201606357 | A | |
| WO | 2021/132696 | A1 | 01 July 2021 | CN | 114901466 | A | |

Form PCT/ISA/210 (patent family annex) (January 2015)

**EP 4 438 574 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11228186 A